# FASCICULE DE BREVET EUROPEEN

(11) **EP 1 000 453 B1**
(45) Date de publication et mention de la délivrance du brevet: **09.03.2005**
(21) Numéro de dépôt: 98938742.8
(22) Date de dépôt: 13.07.1998
(51) Int. Cl.: H02H 7/08

(54) **DISPOSITIF ET PROCEDE DE MISE HORS TENSION D'UN RECEPTEUR, ET APPAREIL ELECTRIQUE AINSI EQUIPE**
VORRICHTUNG UND VERFAHREN ZUM ABSCHALTEN DER VERSORGUNGSSPANNUNG EINER LAST, UND DAMIT AUSGERÜSTETES ELEKTRISCHES GERÄT
DEVICE AND METHOD FOR POWERING DOWN A RECEIVER, AND ELECTRIC APPARATUS EQUIPPED THEREWITH

(30) Priorité: 30.07.1997 FR 9709697
(43) Date de publication de la demande: 17.05.2000
(73) Titulaire: SEB S.A., 69130 Ecully (FR)
(72) Inventeur: ARROUBI, Mustapha, F-14610 Villons les Buissons (FR)
(74) Mandataire: Kiehl, Hubert
(86) Numéro de dépôt international: PCT/FR1998/001530
(87) Numéro de publication internationale: WO 1999/007054

(56) Documents cités:
- EP-A- 0 073 943
- WO-A-93/23904
- DE-A- 3 144 742
- DE-A- 3 924 653
- DE-C- 4 021 559

## Description

La présente invention concerne un procédé de mise hors tension d'un récepteur alimenté sous tension variable à partir d'une source de tension alternative monophasée via des moyens interrupteurs commandés agencés pour appliquer dans des fenêtres temporelles de conduction variables la tension alternative monophasée en entrée dudit récepteur, comportant une détection d'un fonctionnement anormal desdits moyens interrupteurs commandés conduisant à un état de court-circuit, et une mise hors tension dudit récepteur en réponse à une détection de fonctionnement anormal.

Un tel procédé de mise hors tension d'un récepteur est connu d'après les documents DE- A- 3 924 653, DE- A-4 021 559 et DE- A- 3 144 742.

La présente invention concerne également un dispositif mettant en oeuvre ce procédé, ainsi qu'un appareil électrique équipé de ce dispositif.

Il s'agit ici d'appareils électriques alimentés à partir du secteur monophasé sous une tension variable au moyen d'un composant de puissance tel qu'un triac. Ces équipements électriques peuvent représenter des charges indifféremment actives ou réactives. L'utilisation d'un triac conduit à appliquer sur la charge une forme d'onde de tension caractéristique variant selon l'angle d'amorçage de ce triac. La puissance électrique reçue par la charge peut alors être réglée aisément. En cas de court-circuit du triac, la charge reçoit toute la tension disponible, appelle un courant maximum et développe donc la totalité de sa puissance, ce qui peut conduire à des situations dangereuses ou indésirables, telles qu'une suralimentation d'une résistance chauffante ou une survitesse d'un moteur de robot culinaire.

Le but de la présente invention est de remédier à ces inconvénients en proposant un procédé de mise hors tension d'un récepteur au sein d'un appareil électrique, lorsqu'un triac se trouve accidentellement en court-circuit.

Suivant l'invention, le procédé de mise hors tension d'un récepteur, du type décrit précédemment, est plus particulièrement caractérisé en ce que, pour détecter un fonctionnement anormal, on omet périodiquement de commander les moyens interrupteurs commandés pendant une alternance, on mesure le courant absorbé par le récepteur électrique durant cette alternance, et on met hors tension ledit récepteur électrique si le courant absorbé ainsi mesuré est sensiblement non nul.

Selon une autre caractéristique de l'invention, à partir d'une mesure du courant absorbé par le récepteur, on estime la puissance consommée par ledit récepteur, on compare cette puissance estimée avec une consigne de puissance, et on met hors tension ledit récepteur dans le cas d'une différence significative entre puissance estimée et consigne de puissance.

Suivant un autre aspect de l'invention, il est proposé un dispositif pour mettre hors tension un récepteur électrique au sein d'un appareil électrique alimenté sous tension variable à partir d'une source de tension alternative monophasée via des moyens interrupteurs commandés par des moyens de contrôle et de commande agencés pour appliquer dans des fenêtres temporelles de conduction variables la tension alternative monophasée en entrée dudit récepteur électrique, comprenant des moyens pour détecter un fonctionnement anormal desdits moyens interrupteurs commandés, des moyens pour mettre hors tension ledit récepteur électrique, et des moyens pour commander lesdits moyens de mise hors tension en réponse à une détection de fonctionnement anormal par lesdits moyens de détection, les moyens de détection comprenant des moyens pour mesurer le courant absorbé par le récepteur.

Ce dispositif est caractérisé en ce que les moyens de contrôle et de commande sont agencés pour omettre périodiquement de commander les moyens interrupteurs commandés pendant une alternance, et en ce que les moyens de commande coopèrent avec les moyens de mesure de courant pour commander une mise hors tension en cas de mesure d'un courant absorbé sensiblement non nul durant ladite alternance.

Les moyens de mise hors tension comprennent par exemple des moyens de relais en série avec les moyens interrupteurs commandés.

Pour un système d'alimentation sous tension variable comprenant un fusible en série avec le récepteur et les moyens interrupteurs commandés, et dans le cas d'un contrôle de courant, les moyens de mise hors tension peuvent avantageusement comprendre des moyens interrupteurs auxiliaires disposés pour appliquer, en réponse à une détection d'un courant absorbé sensiblement non nul hors des fenêtres temporelles de conduction, la source de tension alternative sur ledit fusible de façon à en provoquer la fusion.

Suivant encore un autre aspect de l'invention, il est proposé un appareil électrique incluant un récepteur alimenté à partir d'une source de tension alternative monophasée via des moyens interrupteurs commandés, caractérisé en ce qu'il comprend un dispositif conforme à l'invention pour mettre hors tension ledit récepteur en cas de détection d'un fonctionnement anormal desdits. moyens interrupteurs commandés.

D'autres particularités et avantages de l'invention apparaîtront encore dans la description ci-après. Aux dessins annexés donnés à titre d'exemples non limitatifs :
- la figure 1 est un schéma synoptique d'un équipement électrique pourvu d'un dispositif de mise hors tension selon l'invention dans une première forme de réalisation avec contrôle de courant ;
- la figure 2 est un schéma synoptique d'un équipement électrique pourvu d'un dispositif de mise hors tension selon l'invention dans une seconde forme de réalisation avec contrôle de tension ;
- la figure 3 est un schéma synoptique d'un équipement électrique pourvu d'un dispositif de mise hors tension selon l'invention dans une troisième forme de réalisation avec contrôle de tension et mise en oeuvre d'un triac auxiliaire ;
- la figure 4 est un schéma synoptique d'un équipement électrique pourvu d'un dispositif de mise hors tension selon l'invention dans une quatrième forme de réalisation avec contrôle de tension et mise en oeuvre d'un triac auxiliaire;
- la figure 5 est un chronogramme de formes d'onde de tension aux bornes du récepteur et de courant absorbé, en fonctionnement normal; et
- la figure 6 est un chronogramme de formes d'onde de tension aux bornes du récepteur et de courant absorbé, en fonctionnement anormal.

On va maintenant décrire plusieurs exemples de réalisation d'un dispositif de mise hors tension selon l'invention, en même temps que le procédé mis en oeuvre dans ce dispositif, en référence aux figures précitées.

Il est à noter que des composants ou éléments identiques dans les différentes figures seront repérés par des références identiques.

On considère tout d'abord un appareil électrique E1 comprenant un récepteur R, par exemple un moteur, alimenté à partir d'une source de tension secteur S via des moyens interrupteurs commandés tels qu'un triac 14, en série avec des contacts d'un relais 13 et un shunt 12 qui font partie d'un dispositif 1 de mise hors tension selon l'invention comprenant en outre un module 16 de traitement de l'information de courant fournie par le shunt 12 et un module 15 de commande du relais 13. Ces deux modules font partie intégrante d'un système de contrôle et de commande 10 de l'appareil électrique E1, ce système recevant des consignes de commande d'un interface utilisateur 11, par exemple d'un ou plusieurs boutons de commande, et délivrant des impulsions de déclenchement du triac 14. Le module de traitement 16 peut en outre réaliser une comparaison de la puissance consommée par le récepteur R à partir de la mesure du courant absorbé avec une consigne de puissance déterminée à partir des informations de commande en provenance de l'interface utilisateur. Le module de commande 15 commande le relais 13 en ouverture dès lors qu'un courant non nul est mesuré dans des plages temporelles correspondant normalement à une non conduction du triac 14.

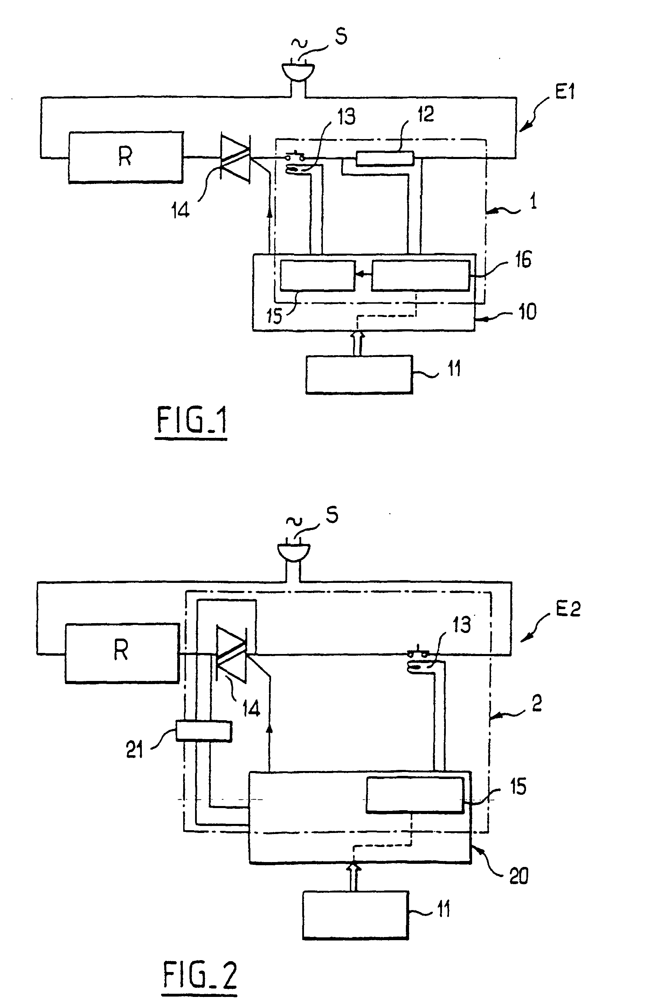

Dans une seconde forme de réalisation représentée en figure 2 et correspondant à un contrôle de tension, un appareil électrique E2 est pourvu d'un dispositif 2 de mise hors tension comprenant un interface 21 de mesure de la tension aux bornes du triac 14, cet interface 21 étant relié à un système 20 de contrôle et de commande incluant un module de commande d'un relais 13 placé en série avec le triac 14. Ce relais 13 est commandé en ouverture dès lors qu'une tension sensiblement nulle est détectée aux bornes du triac 14 dans des plages temporelles correspondant normalement à une non-conduction du triac 14.

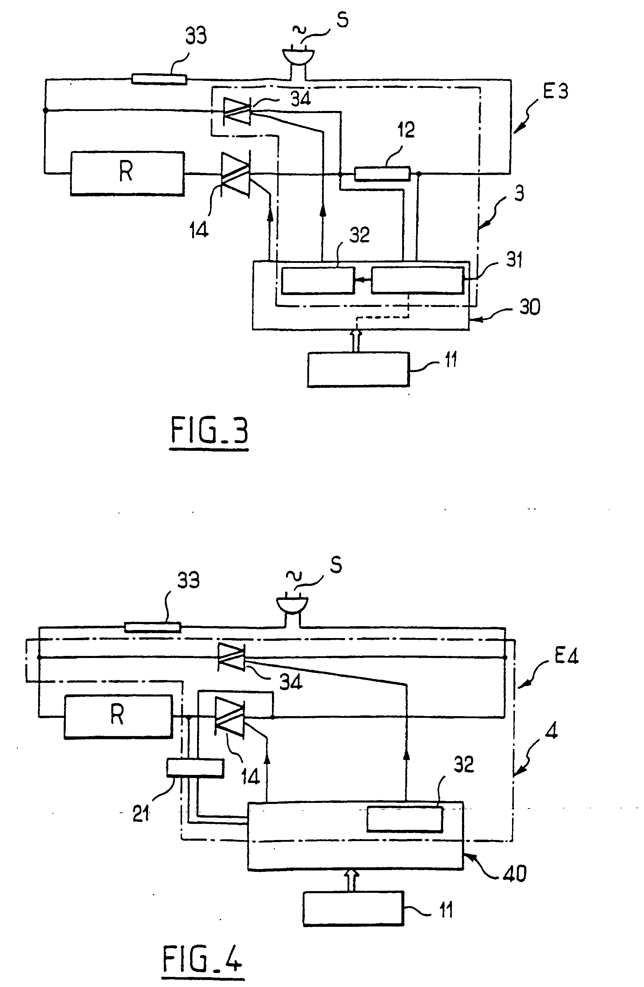

La mise hors tension du récepteur peut aussi être assurée par utilisation d'un triac auxiliaire dont le déclenchement provoque la destruction d'un fusible. Ainsi, on peut concevoir, en référence à la figure 3, un appareil électrique E3 pourvu d'un fusible 33 placé sur une ligne d'alimentation en série avec le récepteur R et d'un dispositif de mise hors tension 3 comprenant un triac auxiliaire 34 ayant l'une de ses bornes connectées entre le fusible 33 et le récepteur R et son autre borne connectée entre le triac principal 14 et le shunt 12. Le dispositif de mise hors tension 3 comprend en outre un module de traitement du courant mesuré par le shunt 12 et un module 32 de déclenchement du triac auxiliaire 34. Ces deux modules 31, 32 sont en pratique inclus au sein d'un système de contrôle et de commande 30 de l'appareil électrique E3. Le dispositif de mise hors tension 3 est agencé pour provoquer par déclenchement du triac auxiliaire 34 une fusion du fusible 33 par liaison de la source alternative (S) sur ledit fusible et par conséquent une ouverture du circuit électrique conduisant à la mise hors tension du récepteur R.

Cette autre façon de provoquer la mise hors tension du récepteur peut aussi être mise en oeuvre dans le cas d'un contrôle de tension, comme l'illustre la figure 4 représentant un appareil électrique E4 pourvu d'un dispositif de mise hors tension 4 comprenant un interface 21 de mesure de tension aux bornes du triac principal 14 et un module 32 de déclenchement du triac auxiliaire 34 au sein d'un système de contrôle et de commande 40.

Il est à noter que ces formes particulières de réalisation mettant en oeuvre un triac auxiliaire conduisent à la destruction du fusible, ce qui accroît encore la sécurité de l'appareil puisqu'il est de toute façon nécessaire de changer ce fusible même si le dispositif de mise hors tension se trouve pour une raison ou une autre désactivé.

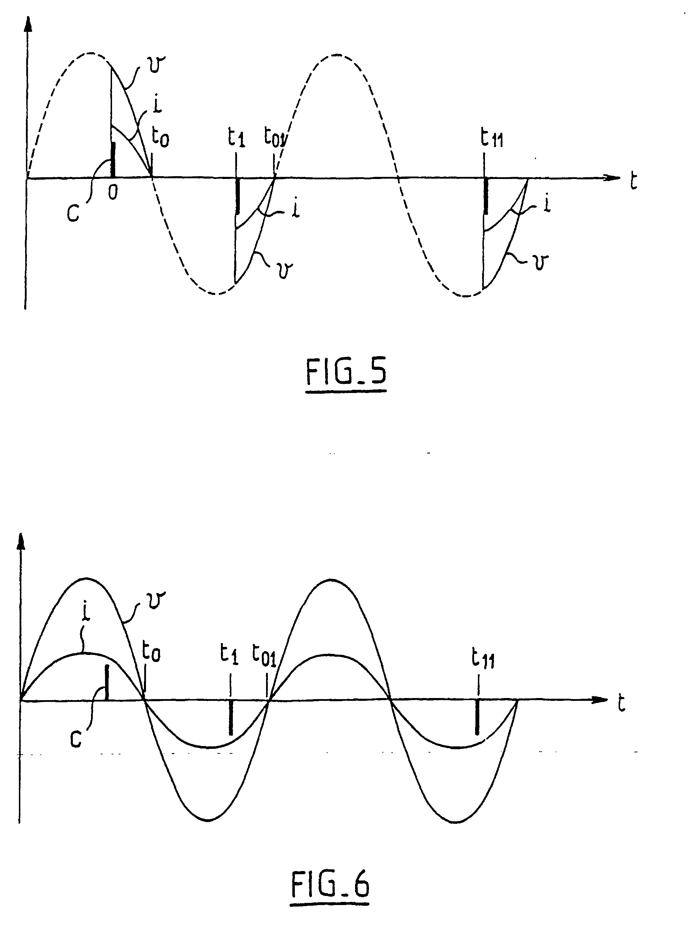

On va maintenant décrire le procédé de mise hors tension mis en oeuvre dans les dispositifs qui viennent d'être décrits, en référence aux figures précitées et plus particulièrement aux figures 5 et 6.

Dans le cas d'un fonctionnement normal du triac 14, à chaque impulsion de déclenchement C, des fractions d'ondes de tension v sont appliquées sur le récepteur R. Il s'ensuit une absorption de courant i par le récepteur R avec des formes d'onde caractéristiques, pendant des fenêtres temporelles de conduction (0, to], [t1, t01], de durée variable déterminée par la nature (inductive ou résistive) du récepteur et par l'angle réglable d'amorçage ou de déclenchement du triac 14. Il est à noter que la figure 5 correspond précisément au cas d'un récepteur purement résistif. En dehors de ces fenêtres de conduction, le courant absorbé par le récepteur est sensiblement nul ou négligeable et la tension aux bornes du triac est sensiblement égale à la tension secteur alors que cette même tension est sensiblement nulle ou négligeable (tension de seuil) dans les fenêtres temporelles de conduction.

Dans le cas où le triac 14 se trouve en état de conduction permanente en dépit d'une commande de déclenchement à angle de commande non nul à des instants to, t1, t11, la tension secteur est alors appliquée en permanence sur le récepteur R qui absorbe alors un courant de forme d'onde sensiblement sinusoïdale, comme l'illustre la figure 6. Une telle situation pouvant être particulière dangereuse et préjudiciable, le dispositif de mise hors tension est alors activé pour supprimer toute alimentation directe du récepteur par la source de tension secteur.

Dans le cas d'un contrôle de courant, illustré par les figures 1 et 3, la détection d'un courant non nul hors des fenêtres temporelles de conduction normale provoque l'ouverture du relais 13 (figure 1) ou le déclenchement du triac auxiliaire 34 (figure. 3). Dans les deux cas, l'alimentation du récepteur R est immédiatement interrompue. On peut également prévoir une variante du procédé dans laquelle on omet périodiquement: de déclencher le triac de puissance 14 au cours d'une alternance et on mesure le courant appelé: si ce courant est non nul, on provoque alors la mise hors tension du récepteur soit par ouverture du relais 13, soit par déclenchement du triac auxiliaire 34.

Dans le cas d'un contrôle de tension, illustré par les figures 2 et 4, la détection d'une tension sensiblement nulle ou négligeable aux bornes du triac 14 hors des fenêtres temporelles de conduction normale provoque la mise hors tension du récepteur, soit par ouverture du relais 13, soit par déclenchement du triac auxiliaire 34 et destruction du fusible 33.

Bien sûr, l'invention n'est pas limitée aux exemples qui viennent d'être décrits et de nombreux aménagements peuvent être apportés à ces exemples sans sortir du cadre de l'invention. Ainsi, d'autres composants interrupteurs de puissance commandés peuvent être utilisés. Les modules de détection et de commande peuvent mettre en oeuvre des technologies de fabrication et de conception courantes en électronique. La présente invention peut être appliquée dans de nombreux domaines techniques impliquant des récepteurs alimentés sous tension variable au moyen d'interrupteurs commandés à partir d'une source de tension monophasée, notamment dans le domaine de l'électroménager, des outils professionnels ou domestiques, et des équipements industriels.

## Revendications

1. Procédé pour mettre hors tension un récepteur (R) alimenté sous tension variable à partir d'une source de tension alternative monophasée (S) via des moyens interrupteurs commandés (14) agencés pour appliquer dans des fenêtres temporelles de conduction variables la tension alternative monophasée en entrée dudit récepteur (R), comportant une détection d'un fonctionnement anormal desdits moyens interrupteurs commandés (14) conduisant à un état de court-circuit, et une mise hors tension dudit récepteur (R) en réponse à une détection de fonctionnement anormal, **caractérisé en ce que**, pour détecter un fonctionnement anormal, on omet périodiquement de commander les moyens interrupteurs commandés (14) pendant une alternance, on mesure le courant absorbé par le récepteur (R) durant cette alternance, et on met hors tension ledit récepteur (R) si le courant absorbé ainsi mesuré est sensiblement non nul.

2. Procédé selon la revendication 1, **caractérisé en ce que**, à partir d'une mesure du courant absorbé par le récepteur (R), on estime la puissance consommée par ledit récepteur (R), on compare cette puissance estimée avec une consigne de puissance, et on met hors tension ledit récepteur (R) dans le cas d'une différence significative entre puissance estimée et consigne de puissance.

3. Dispositif (1-4) pour mettre hors tension un récepteur (R) au sein d'un appareil électrique alimenté sous tension variable à partir d'une source de tension alternative monophasée (S) via des moyens interrupteurs commandés (14) par des moyens de contrôle et de commande (10) agencés pour appliquer dans des fenêtres temporelles de conduction variables la tension alternative monophasée en entrée dudit récepteur électrique (R), comprenant des moyens (12, 16; 21) pour détecter un fonctionnement anormal desdits moyens interrupteurs commandés (14), des moyens (13, 34) pour mettre hors tension ledit récepteur électrique (R), et des moyens (15, 32) pour commander lesdits moyens de mise hors tension (13, 34) en réponse à une détection de fonctionnement anormal par lesdits moyens de détection (12, 16 ; 21), les moyens de détection comprenant des moyens (12) pour mesurer le courant absorbé par le récepteur (R), ce dispositif mettant en oeuvre le procédé selon l'une des revendications 1 ou 2, **caractérisé en ce que** les moyens de contrôle et de commande (10) sont agencés pour omettre périodiquement de commander les moyens interrupteurs commandés (14) pendant une alternance, et **en ce que** les moyens de commande (15) coopèrent avec les moyens de mesure de courant (12) pour commander une mise hors tension en cas de mesure d'un courant absorbé sensiblement non nul durant ladite alternance.

4. Dispositif (1, 2) selon la revendication 3, **caractérisé en ce que** les moyens de mise hors tension comprennent des moyens de relais (13) en série avec les moyens interrupteurs commandés (14).

5. Dispositif (3) selon la revendication 4, pour un système d'alimentation sous tension variable comprenant un fusible (33) en série avec le récepteur (R) et les moyens interrupteurs commandés (14), **caractérisé en ce que** les moyens de mise hors tension comprennent des moyens interrupteurs commandés auxiliaires (34) disposés pour appliquer, en réponse à une détection d'un courant absorbé sensiblement non nul hors des fenêtres temporelles de conduction, la source de tension alternative (S) sur ledit fusible (33) de façon à en provoquer la fusion.

6. Appareil électrique (E1-4) incluant un récepteur (R) alimenté à partir d'une source de tension alternative monophasée (S) via des moyens interrupteurs commandés (14), **caractérisé en ce qu'**il comprend en outre un dispositif (1-4) selon l'une quelconque des revendications 3 à 5, pour mettre hors tension ledit récepteur (R) en cas de détection d'un fonctionnement anormal desdits moyens interrupteurs commandés (14).

## Claims

1. A method for de-energising a receiver (R) which is supplied with power under variable voltage from a single-phase alternating voltage source (S) via controlled interrupter means (14) which are arranged to apply the single-phase alternating voltage at the input of the said receiver (R) in conduction time windows of variable duration, the method comprising detecting that the said controlled interrupter means (14) are functioning abnormally, leading to a short-circuit state, and de-energising the said receiver (R) in response to detection of abnormal functioning, **characterised in that**, for the purpose of detecting abnormal functioning, control of the controlled interrupter means (14) is periodically omitted for one cycle, the current absorbed by.the receiver (R) during that cycle is measured, and the said receiver (R) is de-energised if the absorbed current so measured is substantially not zero.

2. A method according to Claim 1, **characterised in that**, from a measurement of the current absorbed by the receiver (R), the power consumed by the said receiver (R) is estimated, the said estimated power is compared with a power rating, and the said receiver (R) is de-energised if there is a significant difference between the estimated power and the power rating.

3. A device (1-4) for de-energising a receiver (R) in an electrical apparatus which is supplied with power under variable voltage from a single phase alternating voltage source (S) via interrupter means (14) controlled by control and command means (10) which are adapted to apply the single-phase alternating voltage to the input of the said electrical receiver (R) in conduction time windows of variable duration, the device comprising means (12, 16; 21) for detecting abnormal functioning of the said controlled interrupter means (14), means (13, 34) for de-energising the said electrical receiver (R), and means (15, 32) for controlling the said de-energising means (13, 34) in response to detection of abnormal functioning by the said detecting means (12, 16; 21), the detecting means comprising means (12) for measuring the current absorbed by the receiver (R), the said device performing the method according to Claim 1 or Claim 2, **characterised in that** the control and command means (10) are arranged to omit periodically the command of the controlled interrupter means (14) during one cycle, and **in that** the command means (15) cooperate with the current measuring means (12) for commanding de-energisation when a substantially non-zero measurement of absorbed current is obtained during the said cycle.

4. A device (1, 2) according to Claim 3, **characterised in that** the de-energising means comprise relay means (13) in series with the controlled interrupter means (14).

5. A device (3) according to Claim 4, for a variable-voltage power supply system which includes a fuse (33) in series with the receiver (R) and the controlled interrupter means (14), **characterised in that** the de-energising means comprise auxiliary controlled interrupter means (34) so disposed as to apply, in response to detection of a substantially non-zero absorbed current outside the conduction time windows, the alternating voltage source (S) on the said fuse (33) whereby to cause it to blow.

6. Electrical apparatus (E1-4) including a receiver (R) supplied with power from a single-phase alternating voltage source (S) via controlled interrupter means (14), **characterised in that** it further includes a device (1-4) according to any one of Claims 3 to 5, for de-energising the said receiver (R) when abnormal functioning of the said controlled interrupter means (14) is detected.

## Patentansprüche

1. Verfahren zum Abschalten der Versorgungsspannung einer Last (R), die mit variabler Spannung versorgt wird von einer einphasigen Wechselstromquelle (S) über gesteuerte Schaltmittel (14), die ausgebildet sind, daß sie die einphasige Wechselspannung in Zeitfenstern mit variabler Leitung an den Eingang der Last (R) anlegen, wobei eine Detektion eines anomalen Betriebs der gesteuerten Schaltmittel (14) zu einem Kurzschlußzustand und einer Abschaltung der Versorgungsspannung der Last (R) in Antwort auf eine Detektierung von anomalem Betrieb führt, **dadurch gekennzeichnet, daß** zum Detektieren eines anomalen Betriebs periodisch unterlassen wird, die gesteuerten Schaltmittel (14) während einer Stromwelle zu steuern, der von der Last (R) während dieser Stromwelle aufgenommene Strom gemessen wird und die Last (R) von der Versorgungsspannung abgeschaltet wird, wenn der so gemessene aufgenommene Strom im wesentlichen nicht Null ist.

2. Verfahren nach Anspruch 1, **dadurch gekennzeichnet, daß**, ausgehend von einer Messung des von der Last (R) aufgenommenen Stroms, die von der Last (R) verbrauchte Leistung bestimmt, diese bestimmte Leistung mit einem Leistungsstellwert verglichen wird und die Last (R) von der Versorgungsspannung abgeschaltet wird, falls eine signifikante Differenz zwischen der bestimmten und der eingestellten Leistung besteht.

3. Vorrichtung (1-4) zum Abschalten der Versorgungsspannung einer Last (R) im Bereich eines elektrischen Geräts, das mit variabler Spannung von einer einphasigen Wechselstromquelle (S) über gesteuerte Schaltmittel (14) versorgt wird, wobei die Schaltmittel durch Überwachungs- und Steuerungsmittel (10) gesteuert sind, die so ausgebildet sind, daß in Zeitfenstem mit variabler Leitung die einphasige Wechselspannung an den Eingang der elektrischen Last (R) gelegt wird, mit Mitteln (12, 16; 21) zum Detektieren eines anomalen Betriebs der gesteuerten Schaltmittel (14), Mitteln (13, 34), welche die elektrische Last (R) von der Versorgungsspannung abschalten und Mitteln (15, 32), welche die Abschaltmittel (13, 14) in Antwort auf eine Detektierung von anomalem Betrieb durch die Detektiermittel (12, 16; 21) steuern, wobei die Detektionsmittel Mittel (12) zum Messen des von der Last (R) aufgenommenen Stroms aufweisen und diese Vorrichtung das Verfahren nach einem der Ansprüche 1 oder 2 umsetzt, **dadurch gekennzeichnet, daß** die Mittel zur Überwachung und Steuerung (10) so ausgebildet sind, daß periodisch unterlassen wird, die gesteuerten Schaltmittel (14) während einer Welle zu steuern, und daß die Steuerungsmittel (15) mit den Mitteln zum Messen des Stroms (12) zusammenwirken, um ein Abschalten der Versorgungsspannung auszulösen, falls während der Welle ein aufgenommener Strom von im wesentlichen nicht Null gemessen wird.

4. Vorrichtung (1, 2) nach Anspruch 3, **dadurch gekennzeichnet, daß** die Mittel zum Abschalten der Versorgungsspannung Relaismittel (13) in Reihe mit den gesteuerten Schaltmitteln (14) aufweisen.

5. Vorrichtung (3) nach Anspruch 4 für ein System zur Versorgung mit variabler Spannung mit einer Schmelzsicherung (33) in Reihe mit der Last (R) und den gesteuerten Schaltmitteln (14), **dadurch gekennzeichnet, daß** die Mittel zum Abschalten der Versorgungsspannung gesteuerte Hilfsschaltmittel (34) aufweisen, die so ausgebildet sind, daß sie in Antwort auf eine Detektierung eines im wesentlichen nicht Null betragenden aufgenommenen Stroms außerhalb von Zeitfenstern der Leitung die Wechselstromspannungsquelle (S) an die Schmelzsicherung (33) legen, um deren Schmelzen zu bewirken.

6. Elektrisches Gerät (El - 4) mit einer Last (R), die von einer einphasigen Wechselspannungsquelle (S) über gesteuerte Schaltmittel (14) versorgt wird, **dadurch gekennzeichnet, daß** es außerdem eine Vorrichtung (1- 4) nach einem der Ansprüche 3 bis 5 aufweist, um die Last (R) von der Versorgungsspannung abzuschalten, falls ein anomaler Betrieb der gesteuerten Schaltmittel (14) detektiert wird.
